(19) Europäisches Patentamt
European Patent Office
Office européen des brevets

(11) Publication number: **0 323 914**
**A2**

(12) # EUROPEAN PATENT APPLICATION

(21) Application number: **89300115.6**

(22) Date of filing: **06.01.89**

(51) Int. Cl.$^4$: **B 29 C 61/06**
H 02 G 15/18

(30) Priority: **08.01.88 GB 8800421**

(43) Date of publication of application:
**12.07.89 Bulletin 89/28**

(84) Designated Contracting States:
**AT BE CH DE ES FR GB IT LI NL SE**

(71) Applicant: **RAYCHEM LIMITED**
**Rolls House 7, Rolls Buildings Fetter Lane**
**London, EC4 1NL (GB)**

(72) Inventor: **Seaborne, Judith**
**77 Pavenhill**
**Purton Swindon Wiltshire (GB)**

**Rowlands, Ceinwen**
**6 Abingdon Court Lane**
**Cricklade Swindon Wiltshire (GB)**

**Page, Ronald Alec**
**13 Riverdale Close**
**Swindon Wiltshire (GB)**

(74) Representative: **Dlugosz, A.C. et al**
**Raychem Limited Intellectual Property Law Department**
**Faraday Road Dorcan**
**Swindon Wiltshire (GB)**

(54) **Arrangement for encapsulating electrical wires.**

(57) An arrangement for encapsulating one or more electrical wires comprises a dimensionally heat-recoverable article for enclosing at least part of the wires which is formed from an olefinic homo- or copolymer, and a quantity of fusible sealant for sealing the wire. The sealant comprises a blend of a thermoplastic polyester and an olefinic polymer having free carboxylic acid groups. The arrangement is useful for forming a moisture block in an electrical harness that employs wires having polyvinyl chloride insulation without the wires becoming unduly embrittled.

EP 0 323 914 A2

## Description

### Arrangement for Encapsulating Electrical Wires

This invention relates to the encapsulation of electrical wires, for example the encapsulation of wires in an electrical harness.

There are many instances where electrical wires need to be encapsulated, for example in order to provide mechanical protection for the wires or to prevent transmission of water, moisture or other fluids along the wires. One form of arrangement for forming a moisture block in a wire bundle is described for example in European patent application No. 249,510 (corresponding to U.S. application No. PCT/GB87/00410) the disclosure of which is incorporated herein by reference. One problem that has been found to occur with such moisture blocking arrangements is that when they are employed with electrical wires that have polyvinyl chloride (pvc) insulation, the use of a sealant that will wet the pvc and therefore be able to form a seal with the pvc, will also cause the insulation to become tough and to some extent brittle after a period of time. The region of brittleness is not limited to those parts of the wire that are encapsulated, but may extend some distance, e.g. in the order of 2 to 3 mm) beyond the encapsulated regions.

According to the present invention there is provided an arrangement for encapsulating one or more electrical wires, which comprises a dimensionally heat-recoverable article for enclosing at least part of the wires which is formed from an olefinic homo- or copolymer, and a quantity of fusible sealant for sealing the wire, the sealant comprising a blend of a thermoplastic polyester and an olefinic polymer having free carboxylic acid groups.

The arrangement according to the invention has the advantage that it enables the brittleness or toughness of the encapsulated wires to be significantly reduced or even prevented. We have found that the brittleness of the wire insulation in such instances is caused by migration of plasticiser from the pvc insulation into the encapsulating sealant. Because a relatively large volume of sealant may be used (compared with the volume of the insulation) and because the insulation/sealant interface has a relatively large area (compared with the volume of the insulation) a significant and rapid reduction in plasticiser level of the wire insulation may be observed with known sealants both in the regions of the wire that are encapsulated and in the adjacent regions. Depending on the type of sealant employed, the plasticiser level in the wire insulation may be reduced by up to 40% after one week ageing at 85°C.

The polyester that is used in the sealant is preferably one having one or more of the following acid groups:

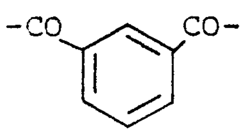 , 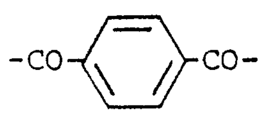 , 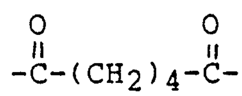 or

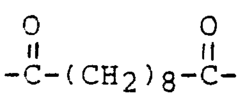

and one or more of the following ether groups: $-O-CH_2CH_2-O-$, $-O-(CH_2)_4-O-$, $-O-(CH_2)_6-O--O-CH_2CH_2OCH_2CH_2-O-$,

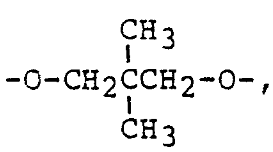 or

$-(OCH_2CH_2)_n-O-$

in which n is an integer of up to 150, preferably from 50 to 100 and especially from 70 to 90.

Normally the polyester will have at least two such acid and/or ether groups. For example the polyester may have both isophthalic and terephthalic acid groups and both 1,4-butanediol and 1,6-hexanediol groups. Another preferred polyester has isophthalic acid, terephthalic acid and decane-1,10-dioic acid groups together with 1,4-butane diol ether groups.

The polyester preferably has a relatively low crystallinity in order to reduce the brittleness of the sealant since a brittle sealant insert may cause a problem for certain forms of arrangement. The crystallinity of the sealant may be judged by the latent heat of fusion of the sealant which may itself conveniently be determined by differential scanning calorimetry. A latent heat value of not more than $40Jg^{-1}$, and especially not more than $35Jg^{-1}$ is preferred. Alternatively or in addition a polyester having a latent heat of fusion of not more than 30 $Jg^{-1}$ especially not more than 26 $Jg^{-1}$ is preferred.

The olefinic polymer that is used in the sealant has free carboxylic acid groups that are preferably, although not necessarily, derived from acrylic acid or methacrylic acid. Thus the preferred olefinic polymers are ethylene acrylic acid and ethylene methacrylic copolymers, especially ethylene acrylic acid copolymer, the copolymer preferably not having any additional comonomers. The olefinic polymer preferably has an acidic comonomer content of up to 20% by weight, preferably up to 12% and especially up to 9% by weight, but normally not less than 3% by weight.

The thermoplastic polyester is usually present in the blend in an amount of 20 to 90% by weight, preferably from 30 to 80% by weight and especially at least 40% by weight e.g. from 50 to 60% by weight, the remainder being the olefinic polymer.

The sealant preferably has a melting or softening point of at least 80°C, preferably at least 90°C and especially at least 100°C in order to retain its strength when subjected to elevated temperatures that may be experienced in an automobile engine, but preferably not higher than 140°C and especially not more than 120°C in order to reduce the risk of damage to the wire insulation during installation. Preferably the melting temperature range, i.e. the difference between the $T_{100}$ and To points of a thermomechanical analysis plot is not more than 20°C, preferably not more than 15°C (measured at a temperature rise of 10°C with a 6.35mm flat profile probe loaded with a 50 g weight).

The heat-shrinkable article used in the present invention is preferably in the form of a sleeve and may be made from a polymeric material exhibiting the property of elastic or plastic memory as described, for example, in U.S. Patents 2,027,962; 3,086,242 and 3,597,372. As is made clear in, for example, U.S. Patent 2,027,962, the original dimensionally heat-stable form may be a transient form in a continuous process in which, for example, an extruded tube is expanded, whilst hot, to a dimensionally heat-unstable form but, in other applications, a preformed dimensionally heat stable article is deformed to a dimensionally heat unstable form in a separate stage.

In the production of heat recoverable articles, the polymeric material may be cross-linked at any stage in the production of the article that will enhance the desired dimensional recoverability. One manner of producing a heat-recoverable article comprises shaping the polymeric material into the desired heat-stable form, subsequently cross-linking the polymeric material, heating the article to a temperature above the crystalline point or, for amorphous materials the softening point, as the case may be, of the polymer, deforming the article and cooling the article whilst in the deformed state so that the deformed state of the article is heat-unstable, application of heat will cause the article to assume its original heat-stable shape.

Alternatively the sleeve may be formed from a fabric, preferably a woven fabric, that employs heatshrinkable fibres and preferably also a polymer matrix, for example as described in European Patent Specification No. 116,393, the disclosure of which is incorporated herein by reference.

Although many polymeric materials may be used to form heat-recoverable articles, those materials based on olefin polymers are preferred for use as heat-shrinkable tubing and the like, especially in automotive applications, in view of their mechanical properties, relative chemical inertness and cost. Such polymers include polyethylene (low medium or even high density) and ethylene copolymers for example with propylene, butene, hexane, octene, vinyl acetate or other vinyl esters or ethyl acrylate.

The polymeric composition may be cross-linked either by the incorporation of a chemical crosslinking agent or by exposure to high energy radiation. Examples of suitable crosslinking agents are free radical initiators such as peroxides for example, dicumyl peroxide, 2,5-bis-(t-butyl peroxy)- 2,5-dimethylhexane, 2,5-bis(t-butyl-peroxy)-2,5-dimethylhexyne-3, α,α-bis-(t-butyl-peroxy)-di-iso propylbenzene. Other examples of appropriate cross-linking agents are disclosed in C.S. Sheppard & V.R. Kamath Polymer Engineering & Science 19 No. 9 597-606, 1979 "The Selection and Use of Free Radical Initiators" the disclosure of which is incorporated herein by reference. In a typical chemically cross-linked composition there will be about 0.5 to 5 weight per cent of peroxide based on the weight of the polymeric composition. The cross-linking agent may be employed alone or in association with a co-curing agent such as a polyfunctional vinyl or allyl compound, e.g. triallyl cyanurate, triallyl isocyanurate or pentaerythritol tetramethacrylate.

Radiation cross-linking may be effected by exposure to high energy irradiation such as an electron beam or gamma rays. Radiation dosages in the range 2 to 80 Mrads, preferably 2 to 50 Mrads, e.g. 2 to 20 Mrads and particularly 4 to 15 Mrads are in general appropriate.

For the purpose of promoting cross-linking during irradiation preferably from 0.2 to 5 weight per cent of a prorad such as a poly-functional vinyl or allyl compound, for example, triallyl cyanurate, triallyl isocyanurate or pentaerythritol tetramethacrylate are incorporated into the composition prior to irradiation.

The heat-shrinkable article may be employed in any conventional form, for example in the form of a tube or short sleeve, a moulded part having one, two or more outlets, e.g. in the form of a cap, or in a tape form. The sealant may be bonded to the heat-shrinkable article, for example it may be coated on the article or it may be formed separately and then inserted into the article, optionally before partially recovering the article onto it. In other applications, for example as described in European patent application No. 249,510 mentioned above, the

sealant may be installed on the wires separately and the heat-shrinkable article may then be located on the installed sealant.

According to another aspect, the invention provides an arrangement which comprises a plurality of electrical wires that have electrical insulation based on polyvinyl chloride, at least part of the wires being enclosed by an article that has been recovered onto the wires by heat, the article containing a quantity of sealant for encapsulating the wires which comprises a blend of a thermoplastic polyester and an olefinic polymer having free carboxylic acid groups.

Various forms of arrangement in accordance with the present invention will now be described by way of example with reference to the accompanying drawings in which:

Figure 1 is a perspective view of a moisture blocking array that may be employed in the present invention;

Figure 2 is a cross-sectional view of a completed moisture block that employs the array of figure 1;

Figure 3 is a perspective view of an alternative form of blocking array; and

Figure 4 is a section along the axis of another article according to the invention.

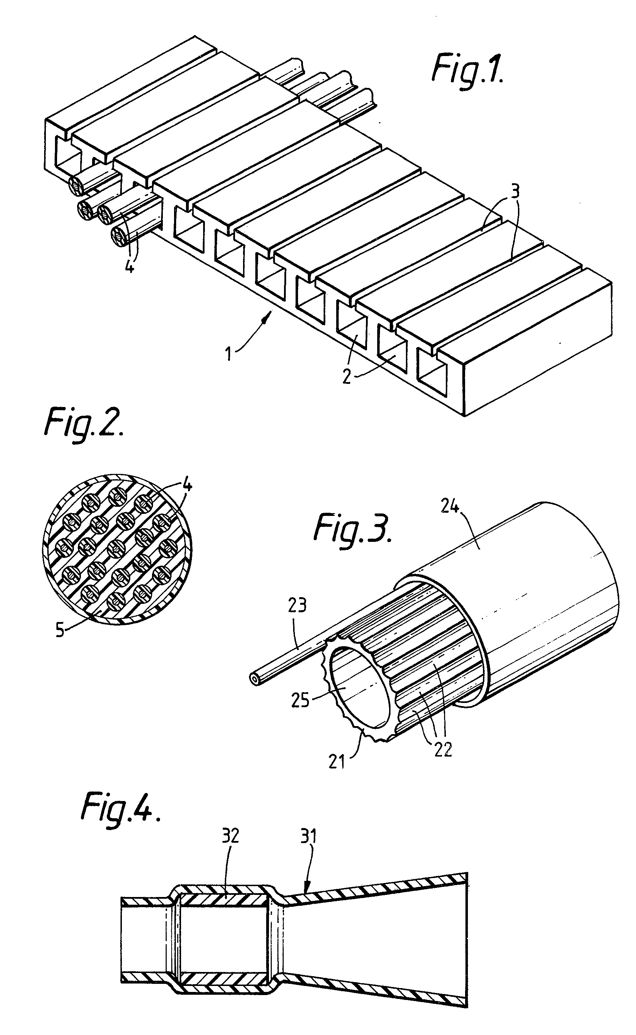

Referring to the accompanying drawings, figure 1 shows a blocking array 1 that may be used to form a moisture block in an automotive harness or cable. The array has a number of channels 2 that extend through the array, and a number of slits 3, each slit communicating with one channel. The slits enable one or two wires to be pressed into each channel 2 from the side of the array. Once all the wires have been inserted into the slits a heat-shrinkable sleeve that had previously been positioned over the wires, is moved over the array and is heated to cause it to shrink. The heating also causes the sealant forming the blocking array to soften to melt, and the recovery of the heat-shrinkable sleeve causes the profile 1 to change from a generally flat configuration to a substantially cylindrical one as shown in figure 2.

It can be seen from figure 2 that the volume of the sealant 5 from which the array was formed may be considerably greater than the volume of the electrical insulation of the wires 4, with the result that if a sealant such as a polyamide were used with pvc insulated wires a considerable proportion of the plasticiser in the pvc could migrate into the sealant with the resulting embrittlement of the wire insulation, whereas by use of a polyester-ethylene/acrylic copolymer blend, substantially no plasticiser is taken up by the sealant. Normally the volume of sealant is at least as great as the volume of electrical insulation of the wires i.e. that part of the wires that is encapsulated in the sealant, but the volume of sealant may be considerably greater, e.g. at least 5 times and sometimes as much as ten or more times the volume of insulation in the wires.

An alternative form of moisture block is shown in figure 3 in which a generally tubular block of sealant 21 has a number of grooves 22 along its periphery for receiving one or more wires 23 of the harness. A heat-recoverable sleeve 24 may then be recovered on the block which melts under the action of the heat used to recover the block and forms a seal. If desired the block may contain an aperture 25 to enable additional wires to be sealed.

Another form of article is shown in figure 4. This device comprises a short length of heat-shrinkable tubing 31 that has been partially recovered over a cylindrical insert 32 of the sealant. The device can be positioned over a standard 2- or 3-pole connector so that the right hand end of the device as shown extends over the connector outlet and the wires extend through the sealant and the left hand end as shown of the device. Recovery of the device about the wires and connector will form a seal at the end of the connector.

The following Examples illustrate the invention:

Example 1

A cable blocking profile of the type shown in figure 1 was installed on ten 18 AWG plasticised pvc wires followed by a conventional low density polyethylene heat-shrinkable sleeve. The arrangement was installed on the wires as described in European application No. 249,510. The blocking profile was formed from the following composition.

| Component | Parts by Weight |
|---|---|
| ethylene acrylic acid copolymer (m.p. 85-95° C) | 42.5 |
| polyester 1 (m.p. 140-150° C) | 27.5 |
| polyester 2 (m.p. 100-110° C) | 30 |
| carbon black | 1 |
| antioxidant | 0.25 |

Polyester 1 was a polyester formed from ethylene glycol and equal quantities (by mole) of terephthalic acid and hexane-1,6-dioic acid.

Polyester 2 was a polyester formed from butane-1,4-diol with a mixture of acids (35% isophthalic acid, 35% terephthalic acid and 30% decane-1,10-dioic acid by mole).

After heat ageing the samples at 85° C for 168 hours the sealant was stripped from the wires and the wires were examined. No deterioration of the wire insulation could be observed. The ultimate elongation of the wire insulation was measured both before and after heat ageing, and the results are shown in Table 1. The tests were repeated for wires from different sources.

TABLE I

| | Conditions | Ultimate Elongation | Retained Elongation |
|---|---|---|---|
| Wire 1 | Control | 195% | 100% |
| Wire 1 | 168 hrs @ 85° C | 167% | 86% |
| Wire 2 | Control | 106% | 100% |
| Wire 2 | 168 hrs @ 85° C | 87% | 82% |

It is believed that some reduction in the ultimate elongation of aged wire insulation was due to damage to the insulation when the sealant was stripped from it.

Comparative Example 1

Example 1 was repeated with the exception that the sealant used for the blocking profile comprised a polyamide hot-melt adhesive. The results are shown in Table II.

TABLE II

| | Conditions | Ultimate Elongation | Retained Elongation |
|---|---|---|---|
| Wire 1 | control | 195% | (100%) |
| Wire 1 | aged in polyamide | 43% | 22% |
| Wire 2 | control | 76% | (100%) |
| Wire 2 | aged in polyamide | 40% | 63% |
| Wire 3 | control | 106% | (100%) |
| Wire 3 | aged in polyamide | 25% | 24% |

In addition, the ratio of plasticiser to polymer in the wires was determined both before and after heat ageing. The original ratio of polymer to plasticiser was 75:25, and the ratio after ageing was 83:17 by weight, indicating a 32% reduction in the plasticiser level of the wire insulation. When a heat-shrinkable sleeve that was lined with an ethylene vinyl acetate acrylic acid terpolymer sealant was employed to form the cable block, those wires that were in contact with the terpolymer suffered an even greater plasticiser loss. In this case the

polymer/plasticiser ratio in the heat aged wires rose to 86:14. indicating a 44% reduction in the plasticiser level of the wire insulation.

Example 2

Plaques were formed from a number of blends of an ethylene acrylic acid copolymer and one or more polyesters at different component levels, and were tested for plasticiser uptake by immersing them in two commonly used plasticisers; dioctyl phthalate (DIOP) and tri-octyl trimellitate (TOT) at room temperature for various periods of time. The results are shown in Table III together with the results for a number of other materials.

TABLE III

| EEA | Blend (note 1) (Parts by Weight) | | | % Weight uptake in | | Immersion |
|---|---|---|---|---|---|---|
| | Polyester 1 | Polyester 2 | Polyester 3 | DIOP | TOT | Time (hrs) |
| 25 | 75 | | | 0.5 | 0.25 | 400 |
| 30 | 30 | | 40 | 0.2 | 0.2 | 400 |
| 40 | 25 | | 35 | 0.45 | 0.35 | 400 |
| 50 | 25 | | 25 | 0.45-0.5 | 0.35-0.4 | 400 |
| 50 | 50 | | | 0.8 | 0.6 | |
| 55 | 15 | | 30 | 0.6 | 0.45 | 400 |
| 40 | 30 | 30 | | | | |
| 80 | 20 | | | 0.9 | 0.8 | 400 |
| Material (comparison) | | | | | | |
| Polyamide hot-melt adhesive | | | | 2.4 | 0.6 | 100 |
| ehtylene vinyl acetate-acrylic acid terpolymer | | | | 7.8 | 3.2 | 100 |

Notes:

(1) Polyester 1 and polyester 2 are as defined in Example 1. Polyester 3 is a polyester whose acid groups comprise 70% terephthalic acid groups and 30% isophthalic acid groups by mole, and whose ether groups are derived from 45% 1,4-butanediol and 55% 1,6-hexanediol by mole. Each blend contained 1% carbon black and 0.25% antioxidant (based on the total weight of the EAA and polyester).

## Claims

1. An arrangement for encapsulating one or more electrical wires, which comprises a dimensionally heat-recoverable article for enclosing at least part of the wires which is formed from an olefinic homo- or copolymer, and a quantity of fusible sealant for sealing the wire, the sealant comprising a blend of a thermoplastic polyester and an olefinic polymer having free carboxylic acid groups.

2. An arrangement as claimed in claim 1, wherein the polyester is a copolymer having one or more of the following acid groups:

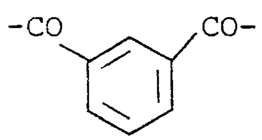 , 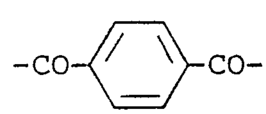 , 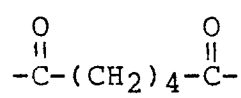 or

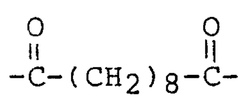

and one or more of the following ether groups:-$O-CH_2CH_2-O-$, $-O-(CH_2)_4-O-$, $-O-(CH_2)_6-O-$-$O-CH_2-CH_2-O-CH_2-O-$,

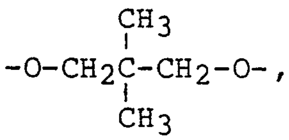 or

$-(OCH_2CH_2)_n-O-$
wherein n is an integer of up to 100.

3. An arrangement as claimed in claim 2, wherein the polyester contains at least two such acid groups and/or at least two such ether groups.

4. An arrangement as claimed in claim 2, wherein the polyester has a latent heat of fusion of not more than 35 $Jg^{-1}$.

5. An arrangement as claimed in any one of claims 1 to 4, wherein the olefinic polymer is an ethylene-acrylic acid copolymer.

6. An arrangement as claimed in claim 5, wherein the olefinic polymer has an acrylic acid content of up to 20% by weight.

7. An arrangement as claimed in claim 5, wherein the olefinic polymer has an acrylic acid content of at least 3% by weight.

8. An arrangement as claimed in claim 1, wherein the thermoplastic polyester is present in the blend in an amount of from 30% to 80% by weight.

9. An arrangement as claimed in claim 1, wherein the sealant is present as a lining on the heat-recoverable article.

10. An arrangement which comprises a plurality of electrical wires that have electrical insulation based on polyvinyl chloride, at least part of the wires being enclosed by an article that has been recovered onto the wires by heat, the article containing a quantity of sealant for encapsulating the wires which comprises a blend of a thermoplastic polyester and an olefinic polymer having free carboxylic acid groups.

Fig.1.

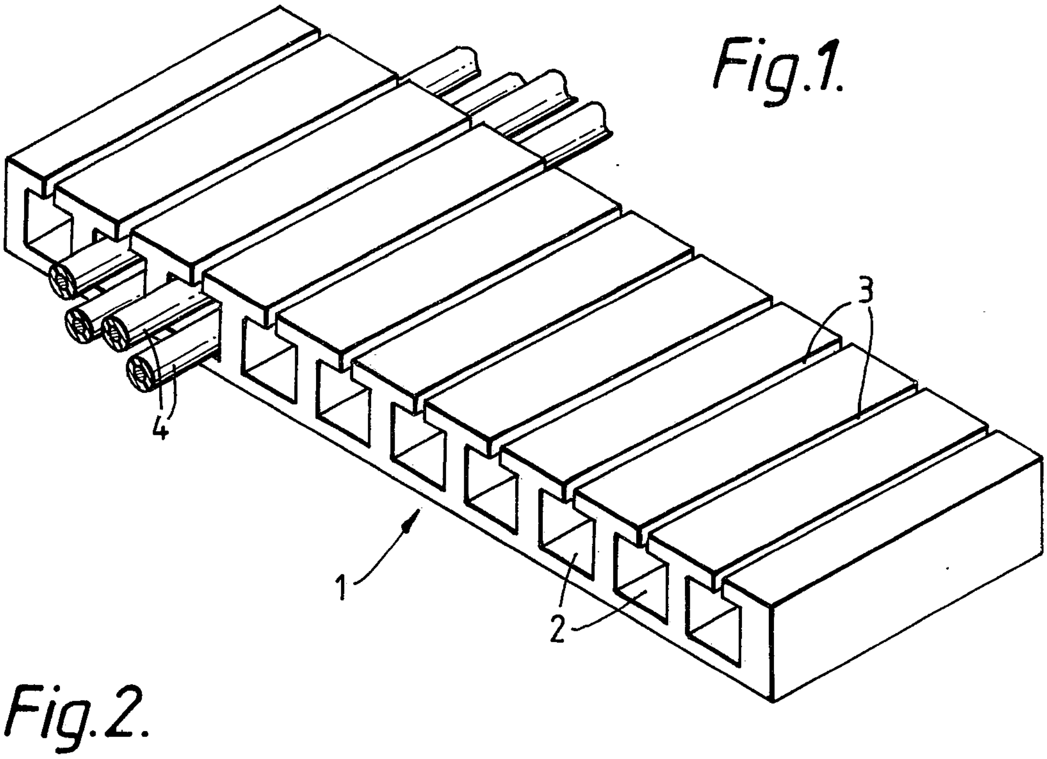


Fig.2.

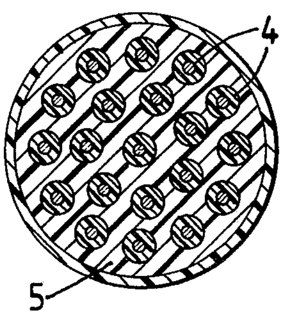


Fig.3.

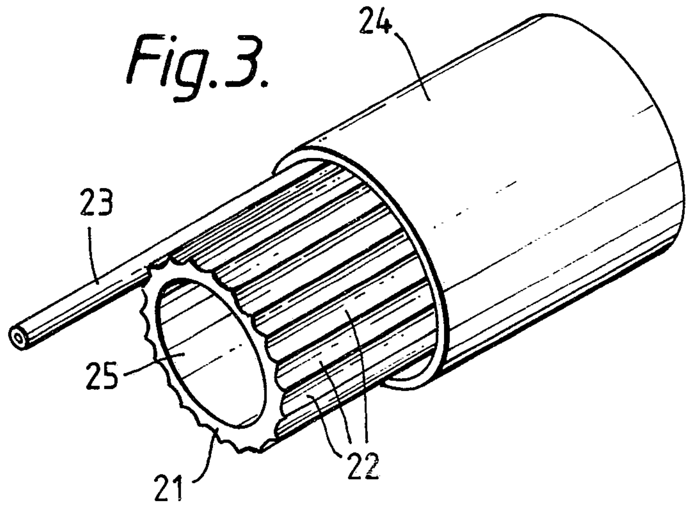


Fig.4.